# EUROPEAN PATENT SPECIFICATION

(11) **EP 4 275 978 B1**
(45) Date of publication and mention of the grant of the patent: **17.09.2025**
(21) Application number: 23173033.4
(22) Date of filing: 12.05.2023
(51) Int. Cl.: B60W 30/182, B60W 60/00, B60W 40/08, B60K 28/06

(54) **METHOD AND DEVICE FOR RESPONDING TO EMERGENCY SITUATION**
VERFAHREN UND VORRICHTUNG ZUR REAKTION AUF EINE NOTFALLSITUATION
PROCÉDÉ ET DISPOSITIF DE RÉPONSE À UNE SITUATION D'URGENCE

(30) Priority: 13.05.2022 KR 20220058907
(43) Date of publication of application: 15.11.2023
(73) Proprietor: Hyundai Mobis Co., Ltd., Gangnam-gu Seoul 06141 (KR)
(72) Inventor: LEE, Il Gyu, Seoul (KR)
(74) Representative: Vossius & Partner Patentanwälte Rechtsanwälte mbB

(56) References cited:
- EP-A1- 3 945 509
- US-A1- 2015 006 012
- US-A1- 2018 037 112
- US-A1- 2018 091 085
- US-A1- 2021 394 773

## Description

### 1. Field

The following description relates to autonomous vehicles (vehicles) in all fields, and more specifically, for example, may be applied to various systems that control driving of a vehicle and unlock the vehicle in response to an emergency situation of a driver in the vehicle.

### 2. Discussion of Related Art

The Society of Automotive Engineers (SAE), the American Society of Automotive Engineers, subdivides autonomous driving levels into six levels, for example, from level 0 to level 5.

Level 0 (No Automation) refers to a level at which a driver who rides in a vehicle controls and is responsible for all of vehicle driving. At Level 0, the driver can always drive the vehicle, and a system of the vehicle is designed to perform only auxiliary functions such as emergency situation notification. In addition, vehicle driving can be controlled by the driver, variables generable during vehicle driving can be sensed by the driver, and the driver is responsible for such vehicle driving.

Level 1 (Driver Assistance) refers to a level of assisting a vehicle driver through adaptive cruise control and lane keeping functions. In Level 1, a vehicle system is activated so that driver assistance can be implemented using vehicle speed control, vehicle-to-vehicle distance maintenance, and lane keeping. Whereas vehicle driving can be controlled by all of the system and the driver, variables generable during vehicle driving can be sensed by the driver, and the driver is also responsible for such vehicle driving.

Level 2 (Partial Automation) refers to a level at which steering and acceleration/deceleration of the vehicle can be controlled by all of the driver and the vehicle for a certain period of time under specific conditions. At Level 2, it is possible to perform assistance driving in which steering of a vehicle (i.e., a host vehicle) running on a gentle curved road and the operation of maintaining a predetermined distance between a host vehicle and a preceding vehicle can be performed. However, at Level 2, variables generable during vehicle driving can be sensed by the driver, and the driver is generally responsible for such vehicle driving. At this time, the driver must always monitor the driving situation, and in a situation that the system does not automatically recognize the driving situation, the driver must immediately intervene forcibly in vehicle driving.

At Level 3 (Partial Automation), the system takes charge of driving the vehicle in a section under certain conditions such as a highway, and the driver intervenes in driving the vehicle only in hazardous situations. At Level 3, variables generable during the vehicle driving can be sensed by the system, so that there is no need to perform the above monitoring in a different way from Level 2. However, if the driving situation exceeds the system requirements, the system requests the driver to immediately intervene in driving the vehicle.

Level 4 (High Automation) enables autonomous driving of the vehicle on most roads. In Level 4, vehicle driving can be controlled by the system, and the system is responsible for such vehicle driving. The driver need not intervene in driving the vehicle on most roads except for roads under restricted situations. However, at Level 4, in certain conditions such as bad weather, the system may request the driver to immediately intervene in driving the vehicle, so that a vehicle driving control device capable of being controlled by humans such as the driver is needed in Level 4.

Level 5 (Full Automation) refers to a level at which the driver need not intervene in driving the vehicle, and the vehicle can be autonomously driven only by an occupant (or a passenger), not the driver. At Level 5, if the occupant inputs a destination to the system, the system takes charge of autonomous driving under all conditions. At Level 5, control devices for vehicle steering and acceleration/deceleration of the vehicle are unnecessary for autonomous driving.

However, in a case of a vehicle accident, there are many situations in which an emergency rescue button cannot be pressed, such as the driver losing consciousness. Therefore, there is a need for an emergency situation response method of recognizing a state of the driver and transmitting an emergency rescue signal. EP-A-3 945 509 relates to a system and method for monitoring a driver. US 2018/091085 A relates to an information presentation device and an information presentation method that present information to vehicle occupants using a display.

The invention is defined by the independent claims. Further embodiments of the invention are defined by the dependent claims.

.

The activating of the emergency control mode based on the travel trajectory of the vehicle may include generating the travel trajectory of the vehicle via sensor information to determine an expected route of the vehicle, determining whether a trajectory generated based on a navigation matches the expected route, and activating the emergency control mode, in response to the travel trajectory not matching the route.

The method may include determining a state of a driver based on a driven state monitoring (DSM) camera and steering wheel sensor information.

The determining of the state of the driver may include determining whether the driver is conscious, determining whether the driver is drowsy or drunk, in response to the driver being conscious, and determining the state of the driver as being abnormal, in response to the driver being unconscious, drowsy, or drunk.

The method may include controlling the vehicle to stop on the shoulder, in response to the state of the driver being abnormal.

The determining of whether the emergency control mode is active may include determining the state of the driver based on the DSM camera and a steering wheel sensor.

The method may include unlocking the vehicle in response to the emergency control mode being active, and transmitting an emergency rescue request, in response to the vehicle being unlocked.

The method may include unlocking the vehicle, in response to a collision occurring while the vehicle is traveling.

In another general aspect, there is provided a device for responding to an emergency situation as defined in claim 8, the device including amongst others a sensor assembly configured to sense surroundings of a vehicle, a driving information detector configured to detect driving information of the vehicle, and a processor configured to activate an emergency control mode based on a travel trajectory of the vehicle, stop the vehicle on a shoulder based on the emergency control mode, output an emergency light of the vehicle, and determine whether the emergency control mode is active.

The processor may be configured to generate the travel trajectory of the vehicle via sensor information to determine an expected route of the vehicle, determine whether a trajectory generated based on a navigation matches the expected route, and activate the emergency control mode, in response to the travel trajectory not matching the route.

The device may include a warning outputter configured to output the emergency light and a notification.

The processor may be configured to determine a state of a driver via a DSM camera and a steering wheel sensor.

The processor may be configured to unlock the vehicle in response to the emergency control mode being active, and transmit an emergency rescue request in response to the vehicle being unlocked.

The processor may be configured to unlock the vehicle, in response to a collision occurring while the vehicle is traveling.

In another general aspect, there is provided a vehicle including the device for responding to an emergency situation described above.

Other features and aspects will be apparent from the following detailed description, the drawings, and the claims.

### BRIEF DESCRIPTION OF THE DRAWINGS

FIG. 1 is an overall block configuration diagram of an autonomous driving control system to which an autonomous driving device according to one of embodiments of the present invention may be applied.
FIG. 2 is an exemplary diagram showing an example in which an autonomous driving device according to one of embodiments of the present invention is applied to an autonomous vehicle.
FIG. 3 is a block diagram of an emergency situation response device according to one of embodiments of the present invention.
FIG. 4 is a diagram for illustrating activation of an emergency control mode of a vehicle according to one embodiment of the present invention.
FIG. 5 is a flowchart showing a method for controlling an emergency situation response device according to an embodiment of the present invention as a whole.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DESCRIPTION OF SPECIFIC EMBODIMENTS

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the invention of this application. For example, the sequences of operations described herein are merely examples, and are not limited to those set forth herein, but may be changed as will be apparent after an understanding of the invention of this application, with the exception of operations necessarily occurring in a certain order. Also, descriptions of features that are known after an understanding of the invention of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the invention of this application.

Although terms such as "first," "second," and "third", or A, B, (a), (b), and the like may be used herein to describe various members, components, regions, layers, portions, or sections, these members, components, regions, layers, portions, or sections are not to be limited by these terms. Each of these terminologies is not used to define an essence, order, or sequence of corresponding members, components, regions, layers, portions, or sections, for example, but used merely to distinguish the corresponding members, components, regions, layers, portions, or sections from other members, components, regions, layers, portions, or sections. Thus, a first member, component, region, layer, portions, or section referred to in the examples described herein may also be referred to as a second member, component, region, layer, portions, or section without departing from the teachings of the examples.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing. As used herein, the term "and/or" includes any and all combinations of one or more of the associated listed items. For example, "A and/or B" may be interpreted as "A," "B," or "A and B."

The terminology used herein is for the purpose of describing particular examples only and is not to be limiting of the examples. The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

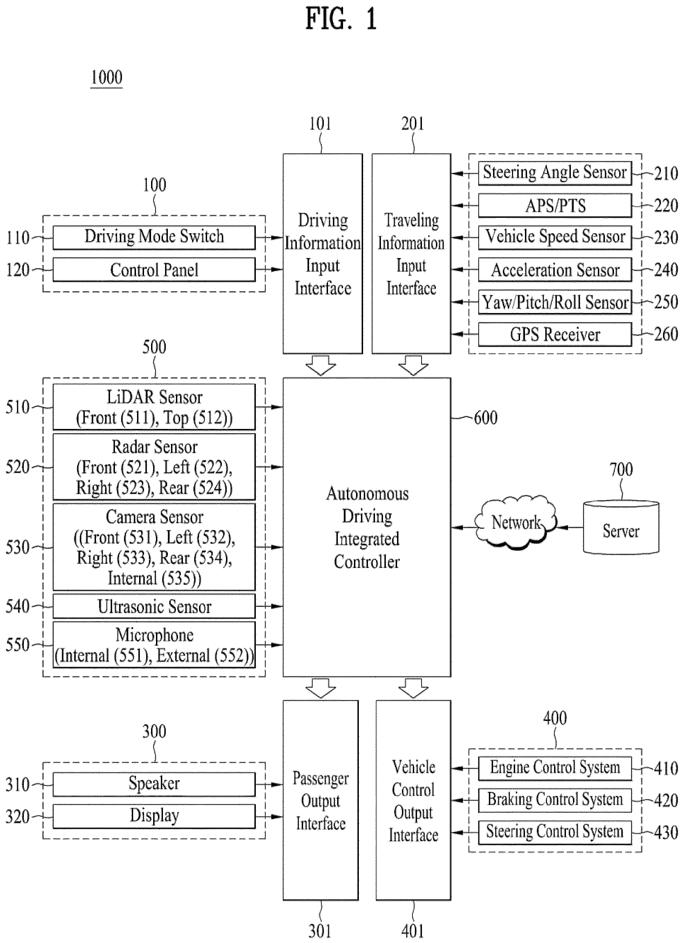

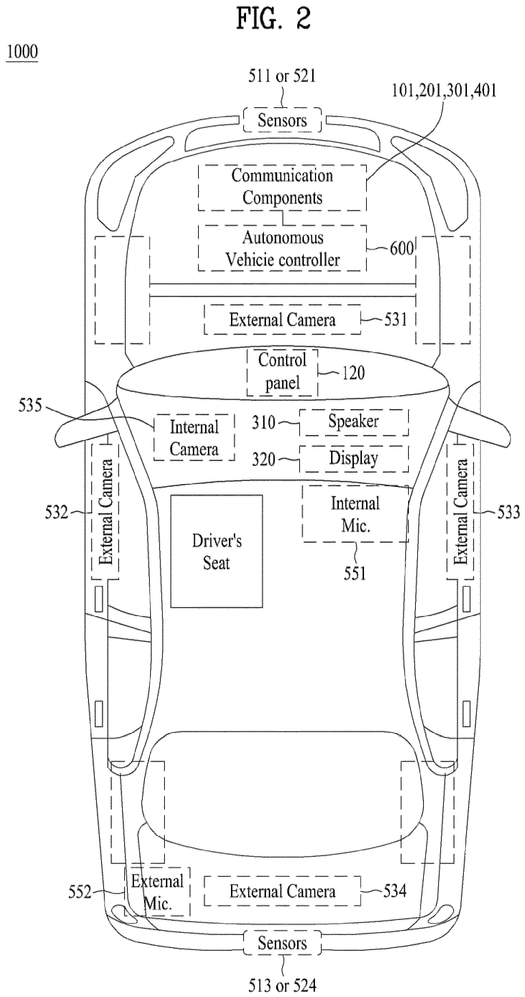

FIG. 1 is an overall block diagram of an autonomous driving control system to which an autonomous driving apparatus according to any one of embodiments of the present invention is applicable. FIG. 2 is a diagram illustrating an example in which an autonomous driving apparatus according to any one of embodiments of the present invention is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, and a vehicle control output interface 401. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on Al or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

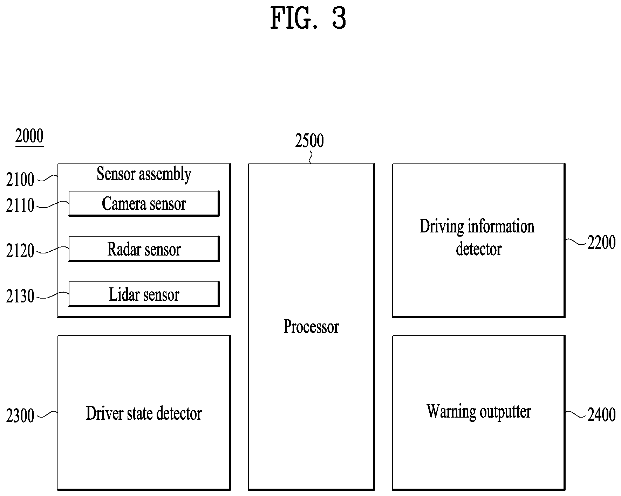

FIG. 3 is a block diagram of an emergency situation response device according to one of embodiments of the present invention.

Referring to FIG. 3, an emergency situation response device 2000 may include a sensor assembly 2100, a driving information detector 2200, a driver state detector 2300, a warning outputter 2400, and a processor 2500.

The sensor assembly 2100 is for recognizing an object around the autonomous vehicle 1000. The sensor assembly 2100 may include at least one of a camera sensor 2110, a radar sensor, and a lidar sensor. The sensor assembly 2100 may sense a vehicle and the object located around the autonomous vehicle.

The camera sensor 2110 may capture surroundings of the autonomous vehicle 1000 and detect the surrounding object outside the autonomous vehicle 1000, and may detect a surrounding object located within ranges of a set distance, a set vertical field of view, and a set horizontal field of view predefined based on specifications thereof.

The camera sensor 2110 may include a front camera sensor, a left camera sensor, a right camera sensor, and a rear camera sensor installed on a front surface, a left side surface, a right side surface, and a rear surface of the autonomous vehicle 1000, respectively, but an installation location and the number of installed units thereof may not be limited by a specific embodiment. The processor 2500 of the autonomous vehicle 1000 may apply predefined image processing to an image captured via the camera sensor to determine a location (including a distance to a corresponding object), a speed, a moving direction, and the like of the corresponding object.

A radar sensor 2120 may detect the surrounding object outside the autonomous vehicle 1000 by radiating an electromagnetic wave to the surroundings of the autonomous vehicle 1000 and receiving a signal reflected by the corresponding object and returning, and may detect a surrounding object located within ranges of a set distance, a set vertical field of view, and a set horizontal field of view predefined based on specifications thereof. The radar sensor 2120 may include a front radar sensor, a left radar sensor, a right radar sensor, and a rear radar sensor installed on the front surface, the left side surface, the right side surface, and the rear surface of the autonomous vehicle 1000, respectively, but an installation location and the number of installed units thereof may not be limited by a specific embodiment. The processor 2500 of the autonomous vehicle 1000 may determine the location (including the distance to the corresponding object), the speed, the moving direction, and the like of the corresponding object via a scheme of analyzing power of the electromagnetic wave transmitted and received via the radar sensor 2120.

A lidar sensor 2130 may detect the surrounding object outside the autonomous vehicle 1000 by transmitting a laser signal to the surroundings of the autonomous vehicle 1000 and receiving a signal reflected by the corresponding object and returning, and may detect a surrounding object located within ranges of a set distance, a set vertical field of view, and a set horizontal field of view predefined based on specifications thereof. The lidar sensor 2130 may include a front lidar sensor 2130, an upper lidar sensor 2130, and a rear lidar sensor 2130 installed on the front surface, an upper surface, and the rear surface of the autonomous vehicle 1000, but an installation location and the number of installed units thereof may not be limited by a specific embodiment. A threshold value for determining validity of the laser signal reflected by the corresponding object and returning may be stored in advance in a memory (not shown) of the processor 2500 of the autonomous vehicle 1000, and the processor 2500 of the autonomous vehicle 1000 may determine the location (including the distance to the corresponding object), the speed, the moving direction, and the like of the corresponding object via a scheme of measuring a time for the laser signal transmitted via the lidar sensor 2130 to be reflected by the corresponding object and returning.

In addition to the camera sensor 2110, the radar sensor 2120, and the lidar sensor 2130, the sensor assembly 2100 may further include an ultrasonic sensor. In addition, various types of sensors for detecting the object around the autonomous vehicle 1000 may be further employed in the sensor assembly 2100.

The driving information detector 2200 may include a vehicle speed sensor, a steering angle sensor, and a positioning sensor. The vehicle speed sensor may sense a traveling speed of the autonomous vehicle 1000, the steering angle sensor may sense a steering angle formed based on manipulation of the steering wheel, and the positioning sensor may include a global positioning system (GPS) receiver and obtain GPS coordinates of the autonomous vehicle 1000 via the GPS receiver. In addition, the driving information detector 2200 may provide navigation information. The navigation information may include at least one of set destination information, route information based on the destination, map information related to a travel route, and current location information of the autonomous vehicle 1000.

The driver state detector 2300 may detect a state of a passenger in a boarding area of passengers in the autonomous vehicle 1000. To this end, the driver state detector 2300 may detect a movement of a driver via a driven state monitoring (DSM) camera to sense the driver located in a driver's seat of the autonomous vehicle 1000.

For example, the driver state detector 2300 may extract driver drowsiness information and driver carelessness information from a driver's face image collected via the DSM camera. The driver state detector 2300 may determine whether a driver's gaze is directed to a place other than on the road and whether a driver's posture is directed in a forward direction of the vehicle via the drowsiness information and the driver inattention information. Therefore, the driver state detector 2300 may determine the movement of the driver, such as a drowsy driving motion and the like.

In addition, the driver state detector 2300 may determine whether a driver's hand is gripping the steering wheel via a steering wheel sensor located on the steering wheel.

For example, the driver state detector 2300 may determine, via the steering wheel sensor, that the driver has intervened in the steering wheel when a torque is generated on the steering wheel.

In one example, the driver state detector 2300 may radiate and receive a radio wave for scanning a detection area within the autonomous vehicle 1000 via the radar sensor located inside the vehicle. The driver state detector 2300 may process the received radar signal to perform a radar sensing function and determine whether there is the passenger in the autonomous vehicle 1000 by a passenger sensing logic. In addition, the driver state detector 2300 identifies the Doppler effect and a phase change caused by a movement of an object using a signal received from an object detected by the passenger sensing logic, and measures whether a biosignal (e.g., a respiration, a heart rate, a respiratory variability, a heart rate variability, a pulse, and the like) exists. The driver state detector 2300 may determine a state of the driver based on a biosignal of the driver located in the vehicle.

Warning outputter 2400 may output an emergency light and a notification in response to an emergency control signal based on an emergency situation of the vehicle. The warning outputter 2400 may control the emergency light to be turned ON in response to that the vehicle is stopped on a shoulder of the road when an emergency control mode is activated for the vehicle. In addition, the warning outputter 2400 may output an in-vehicle safety warning notification in response to the
emergency control mode.

The processor 2500 may monitor a travel trajectory of the vehicle and a travel trajectory of a surrounding vehicle based on sensor information received from the sensor assembly 2100 and driving information received from the driving information detector 2200. Therefore, the processor 2500 may determine the travel trajectories of the vehicle and the surrounding vehicle based on the sensor information. The processor 2500 may determine an expected route of the vehicle based on the travel trajectory of the vehicle based on the sensor information. The processor 2500 may determine an expected route of the surrounding vehicle based on the travel trajectory of the surrounding vehicle based on the sensor information.

In addition, the processor 2500 may determine travel trajectories of the vehicle and the surrounding vehicle based on the navigation information. The processor 2500 may determine an expected route of the vehicle based on the travel trajectory of the vehicle based on the navigation information. The processor 2500 may determine an expected route of the surrounding vehicle based on the travel trajectory of the surrounding vehicle based on the navigation information.

The processor 2500 may determine whether the travel trajectory of the vehicle based on the sensor information and the vehicle trajectory based on the navigation information match each other. The processor 2500 may activate the emergency control mode in response to the travel trajectory of the vehicle. When the generated travel trajectory and the route do not match each other, the processor 2500 may determine that it is the emergency situation and activate the emergency control mode.

The processor 2500 may determine the state of the driver when the emergency control mode is activated. To this end, the processor 2500 may determine a driver's state abnormality based on DSM camera information and steering wheel sensor information received from the driver state detector 2300.

The processor 2500 may determine a case in which the driver is no longer able to drive as the driver's state abnormality.

For example, the processor 2500 may determine whether the driver is conscious based on the DSM camera information and the steering wheel sensor information. In addition, the processor 2500 may determine whether the driver is in a drowsy or drunk state.

The processor 2500 may stop the vehicle on the shoulder in response to the driver's state abnormality. The processor 2500 may control the vehicle to move to the shoulder when there is the driver's state abnormality.

The processor 2500 may control the emergency light to be turned ON after the vehicle has moved to the shoulder. The processor 2500 may output the in-vehicle safety warning notification.

The processor 2500 may re-determine the state of the driver.

To this end, the processor 2500 checks the state of the driver via the DSM camera and the steering wheel sensor. After face orientation and state recognition analysis, whether there is an abnormality may be determined. The processor 2500 may determine whether the state of the driver is a simple drowsy driving state or a drunk driving state.

In addition, the processor 2500 determines whether the emergency control mode is turned OFF based on an input of the driver.

The processor 2500 may unlock the vehicle based on the driver state re-determination result. When the emergency control mode is in the OFF state, the processor 2500 may unlock the vehicle.

The processor 2500 may control to transmit an emergency rescue request when the vehicle is unlocked. For example, the processor 2500 may transmit the emergency rescue request to 119 or 112 based on a communication system and transmit an emergency rescue request signal to the surrounding vehicle via a V2X function.

In addition, the processor 2500 may unlock the vehicle when a collision occurs with the vehicle.

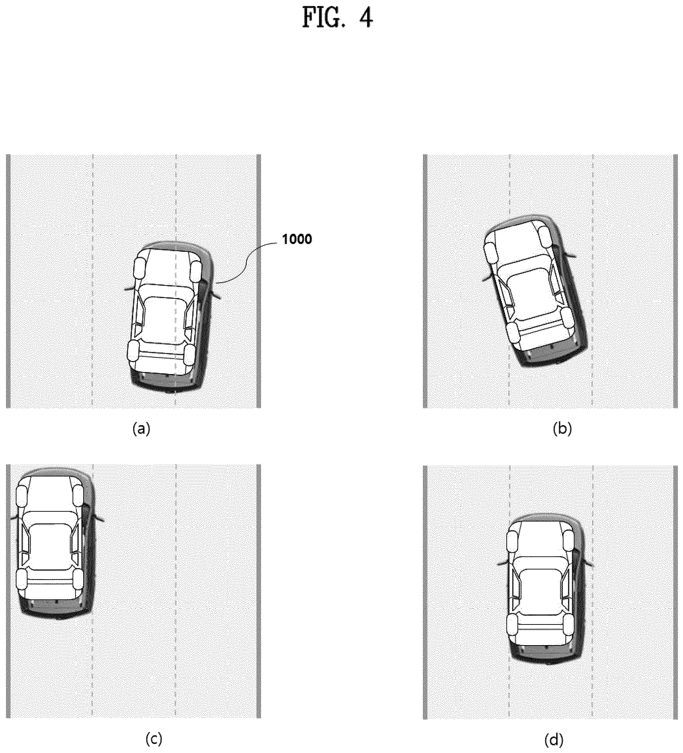

FIG. 4 is a diagram for illustrating activation of an emergency control mode of a vehicle according to one embodiment of the present invention.

The emergency situation response device 2000 of the vehicle 1000 may generate the vehicle trajectory based on the sensor information to determine the vehicle expected route, and determine whether the determined vehicle expected route matches the route based on the vehicle trajectory based on the navigation information. When the trajectory of the vehicle and the steering angle do not match each other, the emergency situation response device 2000 may determine an abnormality in driving of the vehicle, determine the driver's state abnormality, and activate the emergency control mode.

As shown in (a) in FIG. 4, when the vehicle 1000 traveling in a center lane on a three-lane road is biased to the right and invades a right lane, the emergency situation response device 2000 may determine the driver's state abnormality and activate the emergency control mode when sensing the abnormality in the driving of the vehicle based on the travel trajectory of the vehicle and the steering angle of the vehicle.

As shown in (b) in FIG. 4, when the vehicle 1000 traveling in the center lane on the three-lane road is biased to the left and invades a left lane, the emergency situation response device 2000 may sense the abnormality in the driving of the vehicle based on the travel trajectory of the vehicle and the steering angle of the vehicle, determine the driver's state abnormality, and activate the emergency control mode.

As shown in (c) in FIG. 4, when the vehicle 1000 is stopped on the road based on a signal change, the emergency situation response device 2000 may sense the abnormality in the vehicle traveling based on braking information of the vehicle, determine the driver's state abnormality, and activate the emergency control mode.

As shown in (d) in FIG. 4, when the vehicle 1000 is in a sudden start or sudden stop state, the emergency situation response device 2000 may sense the abnormality in the driving of the vehicle based on the braking information of the vehicle, determine the driver's state abnormality, and activate the emergency control mode.

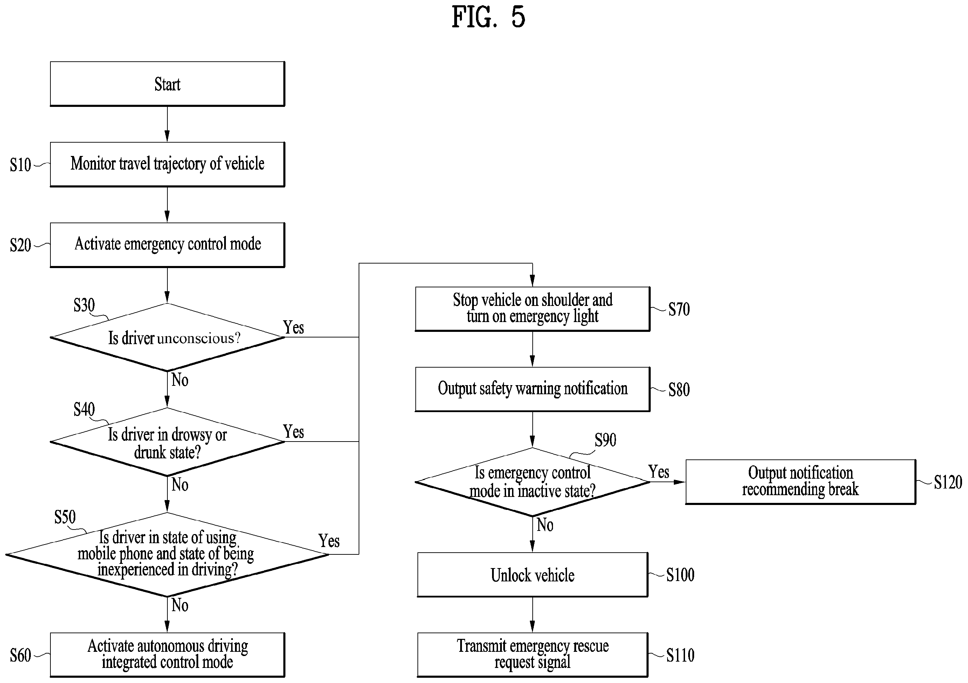

FIG. 5 is a flowchart showing a method for controlling an emergency situation response device according to an embodiment of the present invention as a whole.

Referring to FIG. 5, the emergency situation response device 2000 may monitor the travel trajectory (S10). The emergency situation response device 2000 may determine whether the travel trajectory of the vehicle based on the sensor information and the trajectory of the vehicle based on the navigation information match each other.

After the step S10, the emergency situation response device 2000 may activate the emergency control mode by determining that it is the emergency situation when the travel trajectories do not match each other (S20).

After the step S20, when the emergency control mode is activated, the emergency situation response device 2000 may determine whether the driver is unconscious based on the DSM camera information and the steering wheel sensor information (S30).

After the step S30, when the driver is conscious, the emergency situation response device 2000 may determine whether the driver is in the drowsy or drunk state (S40).

After the step S40, the emergency situation response device 2000 may determine whether the driver is in a state of using a mobile phone and a state of being inexperienced in the driving when the driver is not in the drowsy or the drunk state (S50).

After the step S50, when the driver is in the state of using the mobile phone and the state of being inexperienced in the driving, the emergency situation response device 2000 may control the vehicle to travel in an autonomous driving integrated control mode (S60). In this regard, the autonomous driving integrated control mode may perform control such as advanced driver assistance system (ADAS), lane keeping assist (LKA), smart cruise control (SCC), forward collision-avoidance assist (FCA), blind-spot collision-avoidance assist (BCA), and the like.

After the step S60, the emergency situation response device 2000 may perform the step S20 of activating the emergency control mode again.

On the other hand, after the step S30, when the driver is unconscious, the emergency situation response device 2000 controls the vehicle to stop on the shoulder based on the emergency control mode. Thereafter, the emergency situation response device 2000 controls the emergency light of the vehicle to be turned ON (S70).

In addition, after the step S40, when the driver is in the drowsy and drunk state, the emergency situation response device 2000 may perform the step S70. In addition, after the step S50, when the driver is not in the state of using the mobile phone and the state of being inexperienced in the driving, the emergency situation response device 2000 may perform the step S70.

After the step S70, the emergency situation response device 2000 may output the safety warning notification (S80).

After the step S80, the emergency situation response device 2000 may determine whether the emergency control mode is in an inactive state (S90). To this end, the emergency situation response device 2000 may re-determine the state of the driver.

After the step S90, the emergency situation response device 2000 may control to unlock the vehicle when the emergency control mode is not in the inactive state (S100).

After the step S100, the emergency situation response device 2000 may transmit the emergency rescue request signal (S110). The emergency situation response device 2000 may transmit the emergency rescue request based on the communication system and transmit the emergency rescue request signal to the surrounding vehicle via the V2X function.

On the other hand, after the step S90, when the emergency control mode is in the inactive state, the emergency situation response device 2000 may control to output a notification recommending a break (S120).

That is, the technical idea of the present invention may be applied to an entirety of the autonomous vehicle or only to some components inside the autonomous vehicle. The scope of rights of the present invention should be determined based on the matters described in the claims.

As another aspect of the present invention, the operation of the proposal or the present invention described above may be provided as a code or an application that stores or includes the code, a computer-readable storage medium, or a computer program product that may be embodied, implemented, or executed by a "computer" (a comprehensive concept including a system on chip (SoC), a microprocessor, or the like), which also falls within the scope of rights of the present invention.

Another aspect of the present invention is to provide an emergency situation response device that determines a state of a vehicle's driver to control the vehicle to stop on a shoulder and unlocks the vehicle.

The computing apparatuses, the electronic devices, the processors, the memories, and other components described herein with respect to FIGS. 1-5 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in the figures that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-Res, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers. understanding of the invention of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the invention is defined not by the detailed description, but by the claims.

## Claims

1. A processor-implemented method for responding to an emergency situation, the method comprising:
activating an emergency control mode based on a travel trajectory of a vehicle (1000);
stopping the vehicle on a road shoulder based on activation of the emergency control mode;
outputting an emergency light of the vehicle in response to the vehicle being stopped on the road shoulder; and
determining whether the emergency control mode is inactive based on an input of a driver of the vehicle,
wherein the emergency control mode is determined to be inactivated upon detection of the input of the driver of the vehicle.

2. The method of claim 1, wherein the activating of the emergency control mode based on the travel trajectory of the vehicle comprises:
generating the travel trajectory of the vehicle via sensor information to determine a predicted route of the vehicle;
determining whether a trajectory generated based on a navigation matches the predicted route; and
activating the emergency control mode in response to the travel trajectory not matching the predicted route.

3. The method of claim 1 or 2, further comprising:
determining a state of a driver based on a driven state monitoring (DSM) camera and steering wheel sensor information.

4. The method of claim 3, wherein the determining of the state of the driver comprises:
determining whether the driver is conscious;
determining whether the driver is drowsy or drunk, in response to determining that the driver is conscious; and
determining the state of the driver as being abnormal, in response to the driver being unconscious, drowsy, or drunk.

5. The method of claim 4, wherein the determining of whether the emergency control mode is active comprises:
determining the state of the driver based on the DSM camera and a steering wheel sensor.

6. The method of any one of claims 1 to 5, further comprising:
unlocking the vehicle in response to the emergency control mode being active; and
transmitting an emergency rescue request, in response to the vehicle being unlocked.

7. The method of any one of claims 1 to 6, further comprising:
unlocking the vehicle, in response to a collision occurring while the vehicle is traveling.

8. A device (2000) for responding to an emergency situation, the device comprising:
a sensor assembly (2100) configured to sense surroundings of a vehicle (1000);
a driving information detector (2200) configured to detect driving information of the vehicle; and
a processor (2500) configured to:
activate an emergency control mode based on a travel trajectory of the vehicle;
stop the vehicle on a road shoulder for the vehicle based on the activation of the emergency control mode,
output an emergency light of the vehicle in response to the vehicle being stopped on the road shoulder; and
determine whether the emergency control mode is inactive based on an input of a driver of the vehicle,
wherein the emergency control mode is determined to be inactivated upon detection of the input of the driver of the vehicle.

9. The device of claim 8, wherein the processor is further configured to:
generate the travel trajectory of the vehicle via sensor information to determine an expected route of the vehicle;
determine whether a trajectory generated based on a navigation matches the expected route; and
activate the emergency control mode, in response to the travel trajectory not matching the route.

10. The device of claim 8 or 9, further comprising:
a warning outputter (2400) configured to output the emergency light and a notification.

11. The device of any one of claims 8 to 10, wherein the processor is further configured to determine a state of a driver via a driven state monitoring (DSM) camera and a steering wheel sensor.

12. The device of any one of claims 8 to 11, wherein the processor is further configured to:
unlock the vehicle in response to determining that the emergency control mode is active; and
transmit an emergency rescue request in response to the vehicle being unlocked.

13. The device of any one of claims 8 to 12, wherein the processor is further configured to unlock the vehicle in response to a collision occurring while the vehicle is traveling.

14. A vehicle (1000) comprising:
the device for responding to an emergency situation according to any one of claims 8 to 13.

## Patentansprüche

1. Prozessor-implementiertes Verfahren zum Reagieren auf eine Notfallsituation, wobei das Verfahren aufweist:
Aktivieren eines Notsteuerungsmodus basierend auf einer Fahrtrajektorie eines Fahrzeugs (1000);
Anhalten des Fahrzeugs auf einem Seitenstreifen basierend auf der Aktivierung des Notsteuerungsmodus;
Ausgeben eines Notlichts des Fahrzeugs als Reaktion darauf, dass das Fahrzeug auf dem Seitenstreifen angehalten wurde; und
Bestimmen, ob der Notsteuerungsmodus inaktiv ist, basierend auf einer Eingabe eines Fahrers des Fahrzeugs,
wobei festgestellt wird, dass der Notsteuerungsmodus inaktiviert worden ist, wenn die Eingabe des Fahrers des Fahrzeugs erfasst wird.

2. Verfahren nach Anspruch 1, wobei das Aktivieren des Notsteuerungsmodus basierend auf der Fahrtrajektorie des Fahrzeugs aufweist:
Erzeugen der Fahrtrajektorie des Fahrzeugs über Sensorinformationen, um eine vorhergesagte Route des Fahrzeugs zu bestimmen;
Bestimmen, ob eine Trajektorie, die basierend auf einer Navigation erzeugt wurde, mit der vorhergesagten Route übereinstimmt; und
Aktivieren des Notsteuerungsmodus als Reaktion darauf, dass die Fahrtrajektorie nicht mit der vorhergesagten Route übereinstimmt.

3. Verfahren nach Anspruch 1 oder 2, das ferner aufweist:
Bestimmen eines Zustands eines Fahrers basierend auf einer Fahrzustandsüberwachungs-(DSM) Kamera und Lenkradsensorinformationen.

4. Verfahren nach Anspruch 3, wobei die Bestimmung des Zustands des Fahrers aufweist:
Bestimmen, ob der Fahrer bei Bewusstsein ist;
Bestimmen, ob der Fahrer schläfrig oder betrunken ist, als Reaktion auf die Bestimmung, dass der Fahrer bei Bewusstsein ist; und
Bestimmen, dass der Zustand des Fahrers anormal ist, als Reaktion darauf, dass der Fahrer bewusstlos, schläfrig oder betrunken ist.

5. Verfahren nach Anspruch 4, wobei die Bestimmung, ob der Notfallkontrollmodus aktiv ist, aufweist:
Bestimmen des Zustands des Fahrers basierend auf der DSM-Kamera und einem Lenkradsensor.

6. Verfahren nach einem der Ansprüche 1 bis 5, das ferner aufweist:
Entriegeln des Fahrzeugs als Reaktion darauf, dass der Notfallkontrollmodus aktiv ist;
und Übertragen einer Notfallrettungsanforderung als Reaktion darauf, dass das Fahrzeug entriegelt wurde.

7. Verfahren nach einem der Ansprüche 1 bis 6, das ferner aufweist:
Entriegeln des Fahrzeugs als Reaktion auf eine Kollision, die sich ereignet, während das Fahrzeug fährt.

8. Vorrichtung (2000) zum Reagieren auf eine Notsituation, wobei die Vorrichtung aufweist:
eine Sensoranordnung (2100), die konfiguriert ist, die Umgebung eines Fahrzeugs (1000) zu erfassen;
einen Fahrinformationsdetektor (2200), der so konfiguriert ist, dass er Fahrinformationen des Fahrzeugs erfasst; und
einen Prozessor (2500), der konfiguriert ist, um:
einen Notsteuerungsmodus basierend auf einer Fahrtrajektorie des Fahrzeugs zu aktivieren;
das Fahrzeug auf einem Seitenstreifen für das Fahrzeug basierend auf der Aktivierung des Notsteuerungsmodus anzuhalten,
ein Notlicht des Fahrzeugs als Reaktion darauf auszugeben, dass das Fahrzeug auf dem Seitenstreifen angehalten wurde; und
Bestimmen, ob der Notsteuerungsmodus inaktiv ist, basierend auf einer Eingabe eines Fahrers des Fahrzeugs,
wobei festgestellt wird, dass der Notsteuerungsmodus inaktiviert worden ist, wenn die Eingabe des Fahrers des Fahrzeugs erfasst wird.

9. Vorrichtung nach Anspruch 8, wobei der Prozessor ferner konfiguriert ist, um:
die Fahrtrajektorie des Fahrzeugs über Sensorinformationen zu erzeugen, um eine erwartete Route des Fahrzeugs zu bestimmen;
zu bestimmen, ob eine Trajektorie, die basierend auf einer Navigation erzeugt wurde, mit der erwarteten Route übereinstimmt; und
den Notsteuerungsmodus als Reaktion darauf zu aktivieren, dass die Fahrtrajektorie nicht mit der Route übereinstimmt.

10. Vorrichtung nach Anspruch 8 oder 9, die ferner aufweist:
eine Warnungsausgabeeinrichtung (2400), die konfiguriert ist, das Notlicht und eine Benachrichtigung auszugeben.

11. Vorrichtung nach einem der Ansprüche 8 bis 10, wobei der Prozessor ferner konfiguriert ist, einen Zustand eines Fahrers über eine Fahrzustandsüberwachungs- (DSM) Kamera und einen Lenkradsensor zu bestimmen.

12. Vorrichtung nach einem der Ansprüche 8 bis 11, wobei der Prozessor ferner konfiguriert ist, um:
das Fahrzeug als Reaktion auf die Feststellung, dass der Notsteuerungsmodus aktiv ist, zu entriegeln und
eine Notrettungsanforderung als Reaktion auf die Entriegelung des Fahrzeugs zu senden.

13. Vorrichtung nach einem der Ansprüche 8 bis 12, wobei der Prozessor ferner konfiguriert ist, um das Fahrzeug als Reaktion auf eine Kollision zu entriegeln, die sich ereignet, während das Fahrzeug fährt.

14. Fahrzeug (1000), das aufweist:
die Vorrichtung zum Reagieren auf eine Notsituation nach einem der Ansprüche 8 bis 13.

## Revendications

1. Procédé mis en œuvre par un processeur pour répondre à une situation d'urgence, ledit procédé comprenant :
l'activation d'un mode de commande d'urgence sur la base d'une trajectoire de déplacement d'un véhicule (1000) ;
la mise à l'arrêt du véhicule sur un accotement sur la base de l'activation du mode de commande d'urgence ;
l'allumage d'un feu de secours du véhicule en réaction à l'arrêt du véhicule sur l'accotement ; et
la détermination si le mode de commande d'urgence est désactivé sur la base d'une entrée du conducteur du véhicule,
le mode de commande d'urgence étant déterminé comme devant être désactivé par détection de l'entrée du conducteur du véhicule.

2. Procédé selon la revendication 1, où l'activation du mode de commande d'urgence sur la base de la trajectoire de déplacement du véhicule comprend :
la génération de la trajectoire du véhicule au moyen d'informations de capteurs afin de déterminer un itinéraire prévu pour le véhicule ;
la détermination si une trajectoire générée sur la base d'une navigation correspond à l'itinéraire prévu ; et
l'activation du mode de commande d'urgence en réaction à une non-correspondance de la trajectoire de déplacement avec l'itinéraire prévu.

3. Procédé selon la revendication 1 ou la revendication 2, comprenant en outre :
la détermination de l'état d'un conducteur au moyen d'une caméra de surveillance de l'état de conduite (DSM) et d'informations de capteur de volant.

4. Procédé selon la revendication 3, où la détermination de l'état du conducteur comprend :
la détermination si le conducteur est conscient :
la détermination si le conducteur est somnolent ou en état d'ébriété, en réaction à la détermination que le conducteur est conscient ; et
la détermination de l'état du conducteur comme étant anormal, en réaction au fait que le conducteur est inconscient, somnolent ou en état d'ébriété.

5. Procédé selon la revendication 4, où la détermination si le mode de commande d'urgence est activé comprend :
la détermination de l'état du conducteur sur la base de la caméra DSM et d'un capteur de volant.

6. Procédé selon l'une des revendications 1 à 5, comprenant en outre :
le déverrouillage du véhicule en réaction à l'activation du mode de commande d'urgence ; et
la transmission d'une demande de secours d'urgence en réaction au déverrouillage du véhicule.

7. Procédé selon l'une des revendications 1 à 6, comprenant en outre :
le déverrouillage du véhicule, en réaction à une collision survenant pendant le déplacement du véhicule.

8. Dispositif (2000) permettant de répondre à une situation d'urgence, comprenant :
un ensemble de capteurs (2100) configuré pour détecter l'environnement d'un véhicule (1000) ;
un détecteur d'informations de conduite (2200) configuré pour détecter des informations de conduite du véhicule ; et
un processeur (2500) configuré pour :
activer un mode de commande d'urgence sur la base d'une trajectoire de déplacement du véhicule ;
mettre à l'arrêt le véhicule sur un accotement pour véhicule sur la base de l'activation du mode de commande d'urgence,
allumer un feu de secours du véhicule en réaction à l'arrêt du véhicule sur l'accotement ; et
déterminer si le mode de commande d'urgence est désactivé sur la base d'une entrée du conducteur du véhicule,
le mode de commande d'urgence étant déterminé comme devant être désactivé par détection de l'entrée du conducteur du véhicule.

9. Dispositif selon la revendication 8, où le processeur est en outre configuré pour :
générer la trajectoire de déplacement du véhicule au moyen d'informations de capteurs afin de déterminer un itinéraire prévu pour le véhicule ;
déterminer si une trajectoire générée sur la base d'une navigation correspond à l'itinéraire prévu ; et
activer le mode de commande d'urgence en réaction à une non-correspondance de la trajectoire de déplacement avec l'itinéraire.

10. Dispositif selon la revendication 8 ou la revendication 9, comprenant en outre :
un émetteur d'alerte (2400) configuré pour allumer le feu de secours et émettre une notification.

11. Dispositif selon l'une des revendications 8 à 10, où le processeur est en outre configuré pour déterminer un état d'un conducteur au moyen d'une caméra de surveillance de l'état de conduite (DSM) et d'un capteur de volant.

12. Dispositif selon l'une des revendications 8 à 11, où le processeur est en outre configuré pour :
déverrouiller le véhicule en réaction à la détermination que le mode de commande d'urgence est activé ; et
transmettre une demande de secours d'urgence en réaction au déverrouillage du véhicule.

13. Dispositif selon l'une des revendications 8 à 12, où le processeur est en outre configuré pour déverrouiller le véhicule, en réaction à une collision survenant pendant le déplacement du véhicule.

14. Véhicule (1000), comprenant :
le dispositif de réponse à une situation d'urgence selon l'une des revendications 8 à 13.
